# EUROPEAN PATENT SPECIFICATION

(11) **EP 0 918 399 B1**
(45) Date of publication and mention of the grant of the patent: **27.07.2005**
(21) Application number: 97203557.0
(22) Date of filing: 14.11.1997
(51) Int. Cl.: H04B 1/38

(54) **Telecommunications card**
Telekommunikationskarte
Carte de télécommunication

(43) Date of publication of application: 26.05.1999
(73) Proprietor: Option, 3000 Leuven (BE)
(72) Inventor: Broos, Marc, 3000 Leuven (BE); Cober, Ben, 3000 Leuven (BE); Gommers, Serge, 3000 Leuven (BE); Vercruysse, Jan, 3000 Leuven (BE)
(74) Representative: Quintelier, Claude

(56) References cited:
- EP-A- 0 556 970
- EP-A- 0 561 257
- WO-A-95/34958
- PATENT ABSTRACTS OF JAPAN vol. 017, no. 148 (E-1338), 24 March 1993 & JP 04 315320 A (SONY CORP), 6 November 1992,

## Description

The present invention relates to a telecommunications card provided for being connected to a host device, in particular a PC notebook, according to the preamble of claim 1.

Such a telecommunications card is known from EP 0 680 155, which card is provided to be alternatively connected to a handset module and a PC notebook. When transmitting and receiving signals, it is well known to have the radio transmitter in the RF section transmit in bursts, which generally last for a few hundred of microseconds.

The drawback of these known device is that these bursts represent a peak power which is relatively high over a selected period of time. A relatively powerful battery or other power source is thus required. Another solution is to provide an additional power source for supplying these high currents.

WO-A-9534958 also discloses a telecommunications card connectable to a host device, but fails to describe how the telecommunications card is powered by the host device. JP-A-04315320 relates to burst communication equipment having a battery and a capacitor as auxiliary power source for preventing voltage drops. EP-A-0561257 relates to a circuit for battery powered radio transmission devices, which has a capacitor whose voltage can be added to the battery voltage in the event of a voltage drop.

The object of the present invention is to provide a telecommunications card which can be powered up by the power source of the host device which may have a modest peak capacity, such as for example a standard battery of a PC notebook.

This object is solved according to the invention in that the telecommunications card comprises the technical characteristics of the characterising part of claim 1.

By providing current limiting means, the current from the power source of the host device is limited, so that a power source of the host device having a modest peak capacity may be used. In order to be able to transmit bursts required by the RF section from the card, an auxiliary power source is provided which is charged by the power source of the host device. This is rendered possible since the bursts only last for a few hundreds of seconds. During these bursts, i.e. in the second operation mode, the auxiliary power source is discharged, whereas between two bursts, i.e. in the first operation mode the auxiliary power source may be charged.

According to a first preferred embodiment of the telecommunications card, said auxiliary source comprises a number of capacitors in parallel. By connecting the capacitors in parallel, sufficient capacity is obtained while remaining within certain dimension constraints of the PCMCIA card.

According to a second preferred embodiment, the telecommunications card according to the invention further comprises switching means connected to said current limiting means and provided for switching on and off said current limiting means. Preferably, said control means are provided for controlling said switching means. This enables to switch off the current limiting means when not needed, for example when no signals must be transmitted or received by the RF section, in order to save the power source from the host device.

According to a third preferred embodiment, the telecommunications card further comprises power level setting means, connected to said current limiting means and provided for setting a maximum allowed transmitter power level. This enables to switch the telecommunications card to different power levels, for example for switching between a class 4 (2 W) and a class 5 (0.8 W) power level.

According to a fourth preferred embodiment, the telecommunications card comprises a cover provided for enclosing a printed circuit board onto which said bus is provided, characterised in that said card further comprises SIM card holding means between said printed circuit board and said cover and that an opening corresponding to the dimensions of the said SIM card holding means is provided in the cover. This SIM card holding means enables to limit considerably introduction of dust on the printed circuit board and serves at the same time as a support means for supporting the cover.

According to a fifth preferred embodiment, said SIM card holding means comprises a latching member provided for being displaced between an open position for inserting and retrieving a SIM card and a closed position for holding said SIM card in said holding means. This latching member enables to easily remove and insert a SIM card.

The invention will now be described in detail referring to the annexed drawing, wherein :
Figure 1 is a schematic representation of the main components which make up the telecommunications card according to the invention.
Figure 2 is a schematic representation of a host device using the integrated circuit of the present invention in the primary mode of voice-operation or in data -operation.
Figure 3 is a schematic representation of a preferred embodiment of the present invention, used with a host device with sound capabilities, i.e. using the primary mode of voice-operation.
Figure 4 is a schematic representation of a host device using the present invention in the alternate mode of voice-operation.
Figure 5 is a schematic representation of a preferred embodiment of the present invention, used with a host device without sound capabilities, i.e. using the alternate mode of voice-operation.
Figure 6 illustrates a circuit for managing the power supplied by the power source of the host device to the telecommunications card according to the invention.
Figure 7 shows a PCMCIA card.
Figure 8 is a perspective view of a standard SIM plug-in card.
Figure 9 is a perspective view of the SIM card holder according to the invention.
Figure 10 illustrates how to insert the SIM card according to Figure 7 in the holder of Figure 8.
Figure 11 shows the SIM card inserted in the holder.
Figure 12 is a section view along line XI-XI of Figure 10.

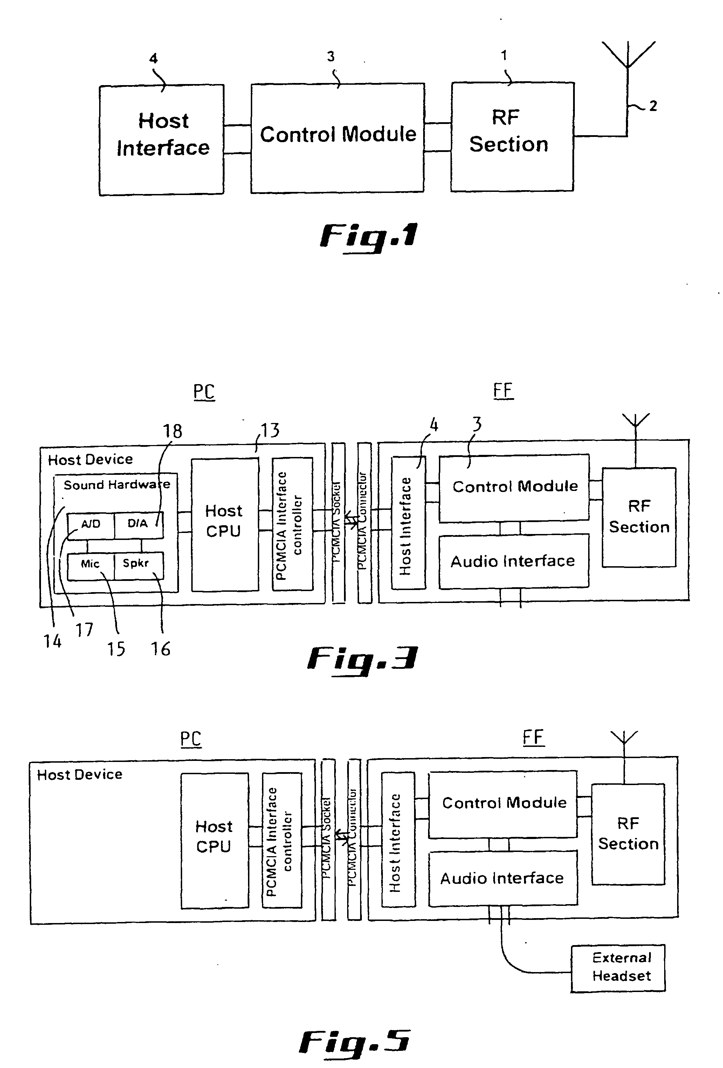

Figure 1, while representing the main cellular phone components, illustrates the invention's basic concept, which is to integrate all components needed for digital wireless voice and data communication into a device, which is fitted with an interface to a host device.

The main components represented in figure 1 are: an RF section 1, an antenna 2, a control module 3 and a host interface 4 connected to one another by means of a bus provided on a printed circuit board (not shown). The RF section with the antenna are provided for transmitting and receiving signals from and to the telecommunications card. The control module is provided for controlling the signals received by the RF section to be transmitted to the host device and the signals received from the host device to be transmitted to the RF section. The host interface is provided for controlling communication between the telecommunications card and the host device.

The above schematic representation is independent from the network technology the cellular device is built for, even if there will be, however some differences in implementation.

Using this concept, the present invention can be attached to a host device, e.g. a PC notebook, thereby providing the means for having voice and data communication. The manner in which voice communication is provided is dependent on the configuration of the host device.

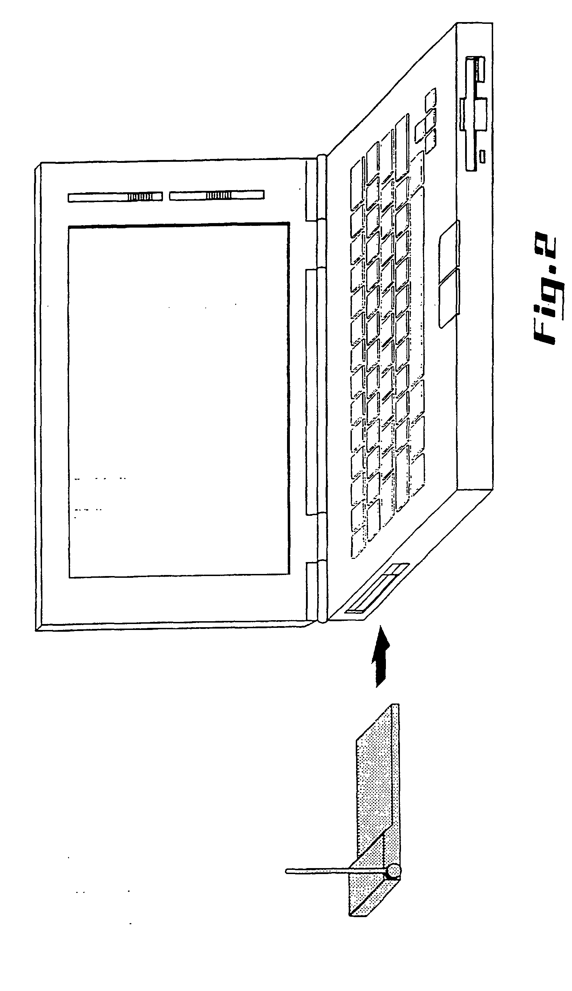

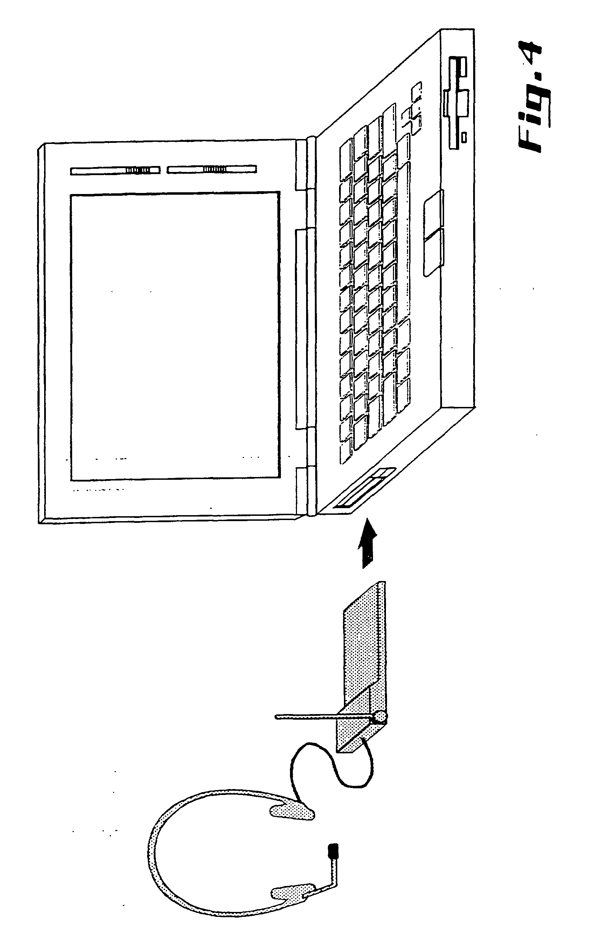

Figure 3 shows a preferred embodiment of the present invention in the primary mode of voice-operation. The primary mode of voice-operation is to be used in the event that the host device 13 is equipped with the proper sound hardware 14, which is constituted by a microphone 15 and a speaker 16 along with an A/D 17 and a D/A 18 converter which can be driven simultaneously, thereby providing a full-duplex sound path. The speech from the user will be picked up by the host device's microphone and converted to digital samples by the A/D converter. To limit the bandwidth usage on the host interface 4 the digital samples are first compressed using a compression technology on the host device, after which the compressed speech data is routed to the control module 3 through the host interface 4. This situation is graphically depicted in figure 2.

Figure 2 also shows the present invention when used for data-communication. In this case, the present invention will mimic the operation of a normal modem connected to the fixed telephone network, with some additions with respect to network, security and usability aspects. However, these additional features are network specific and need not be present in every implementation.

Figure 5 shows a preferred embodiment of the present invention in the alternate mode of voice-operation. This mode is to be used in the event that the host device is not equipped with the proper sound hardware. In this case, an ordinary headset carrying a microphone and a speaker can be plugged in the telecommunications card according to the present invention to provide the means for voice-communication. The invention still has to be attached to a host device through the host interface 4 because it is controlled from the host device. This situation is graphically depicted in figure 4.

The host interface 4 complies with a widely used and accepted electrical and mechanical standard such as the PCMCIA 2.0. The PCMCIA standard has been chosen for its widely acceptance in the industry, however another kind of connection can equally be used.

Referring now to Figure 6, there is shown circuitry according to the invention, to be provided in the telecommunication card for managing the power coming from the power source of the host device. The heart of this circuit is the current limiting device U1. The current limiting device is connected between the PCMCIA connector and the RF section. A current is supplied from the power source of the host device (indicated by VCC) to an input IN1. The current limiting device takes care that this current does not exceed a maximal value I_{MAX}, which is set by device U1. The input IN1 is connected to the power source via a self L1 and parallel connection of two capacitors C1 and C2. L1, C1 and C2 form a low-pass filter which prevents that signals originating from the current limiter would be superposed on the VCC power of the host device and damage the latter. The current arriving in IN1 passes through the current limiting device and is supplied to the output OUT1 which delivers current to the components of the telecommunications card, in particular the RF section. The current output at OUT1 is supplied to capacitor C3 in order to charge this capacitor. Preferably, the capacitor C3 is formed by a number of capacitors connected in parallel. A parallel connection of capacitors enables to provide sufficient storage capacity while remaining within dimension constraints. Capacitor C3 is also connected to the RF section. The capacitor C3 has for example a value of 2.2 mF .

The charge present in capacitor C3 will be used to power the RF-section from the card in combination with the current supplied directly through path IN1/OUT1. The device U1 can be completely turned off by means of the ON/OFF input, which can be driven from the control module 3, thereby reducing consumed power. Shutting down U1 will be done whenever the RF-section can be made inactive. In such a manner there is prevented that the inevitable discharge of C3 due to leakage would cause power to be retrieved from the host to compensate the leakage.

The MODE-input is adjusted when a lower maximum allowed transmitter power level (P_{TMax}) is set. Proportionally to the voltage present at the MODE-input, transistor Q1 will draw more or less current from U1's SET terminal. This, in its turn, will define the maximum current at the IN1 terminal. Thus, the net effect will be that the maximum current drawn from VCC is set by the voltage present on the MODE-input. The MODE-input can be tied to an analog or digital output. In the latter case, only two levels of PTMax are possible.

The resistors R1 to R4 have to be chosen in such a way that the current to the RF-section is adequate for the chosen transmit power level. Furthermore, the value of C3 has to be chosen so that the charge stored in it is sufficient to supply power to the RF-section during each burst, without the voltage becoming out of specification for that particular RF-section.

When the radio transmitter (RF section) is not active, C3 is charged through U1. Thus, R1 to R4 must be carefully dimensioned so that U1 can adequately charge C3 in between the transmitter bursts. When the RF section is active, it will require a peak power, which will be delivered by the output OUT1 and the capacitor C3.

For connection of a wireless telecommunication device such as a mobile phone with a Personal Computer, use is made of a PCMCIA (Personal Computer Memory Card Interface Association) card which is plugged into a host socket/adapter on the computer's motherboard or to its expansion bus. PCMCIA cards provide expansion capability for computers and enable to support several functions such as radio-band fax and modem capabilities, mass storage and memory extension. The socket/adapter on the computer has a standard 68-pin interface for the card and the adapter converts the PCMCIA interface signals to match the computer bus standard.

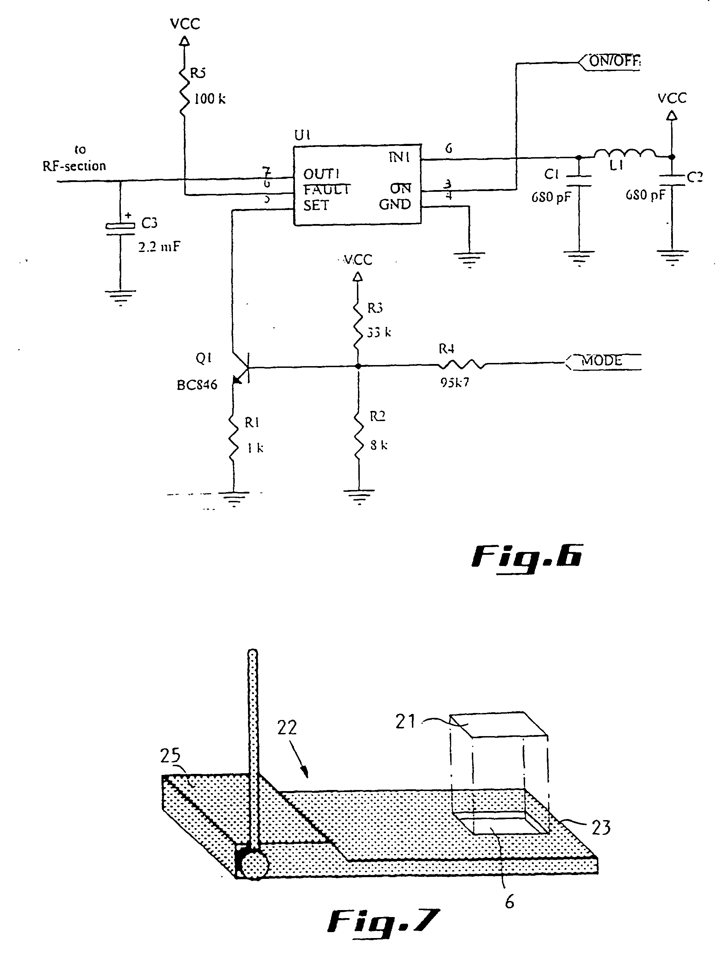

According to the present invention a PCMCIA card 22 is provided with a SIM card connector such as illustrated in figure 7. The connector 6 holds a SIM 21 (Subscriber Identification Module) or UIM (User Identification Module) card. The PCMCIA card is dimensioned in such a manner as to receive the SIM or UIM card. Preferably the PCMCIA card has a length of 85.6 mm. The insertion of the SIM card into the PCMCIA card personalises the latter and comprises information that is specific for the particular used PCMCIA card.

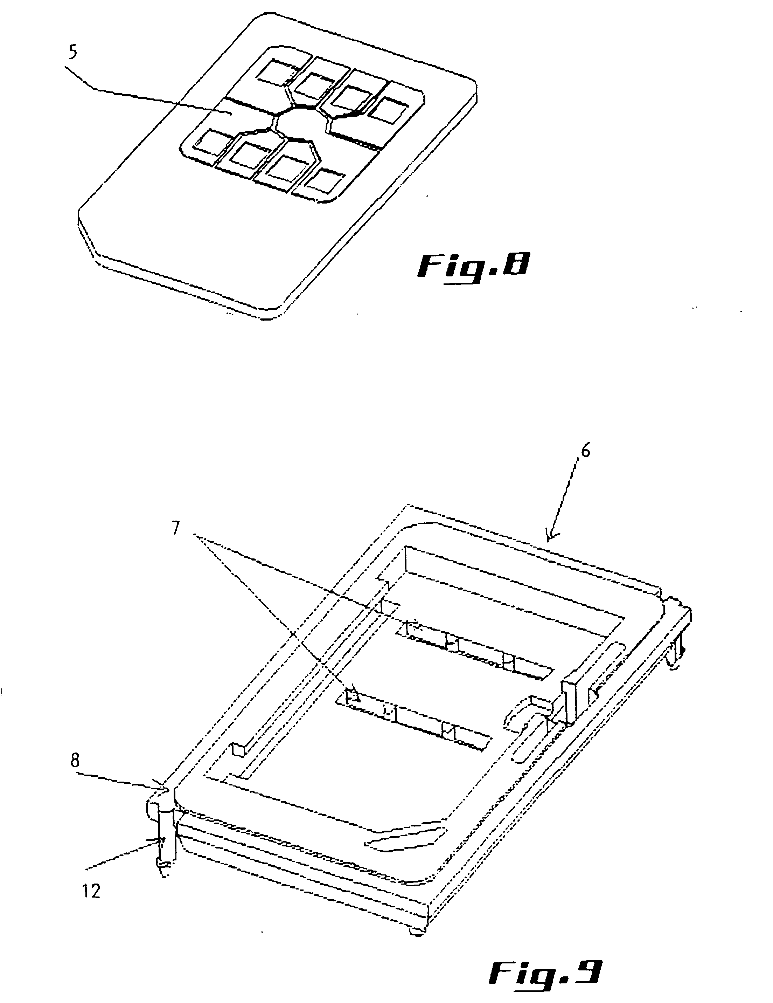

A standard SIM card, as shown in Figure 8, comprises a microchip section 5, onto which data is stored such as identification of the subscriber, address book, .... This SIM card is provided to be fitted in the SIM card connector 6, shown in figure 8 and provided to be placed on the PCMCIA card. Preferably the connector comprises pegs 12 provided to be fitted into corresponding openings in the printed circuit board of the PCMCIA card facilitating the assembling. The connector comprises two grooves 7 for receiving contact members of electrically conductive material for achieving an electrical contact between the microchip 5 on the SIM card and the circuitry on the printed circuit board of the PCMCIA card.

The connector 6 is placed near the 68-pin interface of the PCMCIA card, which interface is situated in the interconnect area 23 of the card. Once mounted in the connector, the SIM card fits completely in the substrate area 24 outside the interconnect area 23. The height of the connector is dimensioned in such a manner that the connector fits into a hole 24 provided in the PCMCIA card. Since the substrate area where the connector is located, is situated outside the RF section 25, crosstalk between the digital signals of the SIM card in the control module situated in the substrate area and the high frequency signals in the RF section is avoided. The signals exchanged between the SIM card and the control module are of low frequency and do not interfere with the high frequency RF signals in the RF section.

The connector 6 further comprises an upright border 8 provided to be fitted in a corresponding opening provided in a cover of the PCMCIA card, making the holder accessible for inserting and removing a SIM card. The corresponding opening is dimensioned in such a manner to correspond to the border of the holder, so that introduction of dust or moisture on the printed circuit board is essentially prevented.

The height of the connector is dimensioned in such a manner that it is no longer necessary to cut a hole in the substrate in which the connector fits. Only a small perforation for insertion of the pegs 12 is necessary. The connector according to the present invention thus no longer requires to apply the "hang in" principle where a hole of a dimension slightly larger than the SIM card is applied on the substrate. The connector is dimensioned in such a manner that it fits within the 5 mm height of the PCMCIA card.

The contact members applied in the grooves 7 are resilient and preferably apply a force of 1,5 N per contact. The upright border 8 is also made of resilient material so that the SIM card, once applied in the connector is kept in place by the resilient force applied at the under side by the contact members and at the upper side by the border 8.

The connector is made of a material having a dielectricum value in such a manner that electrostatic discharge to sensitive components near the connector is substantially reduced. The connector forms indeed a dielectricum barrier interrupting a galvanic path towards the control module.

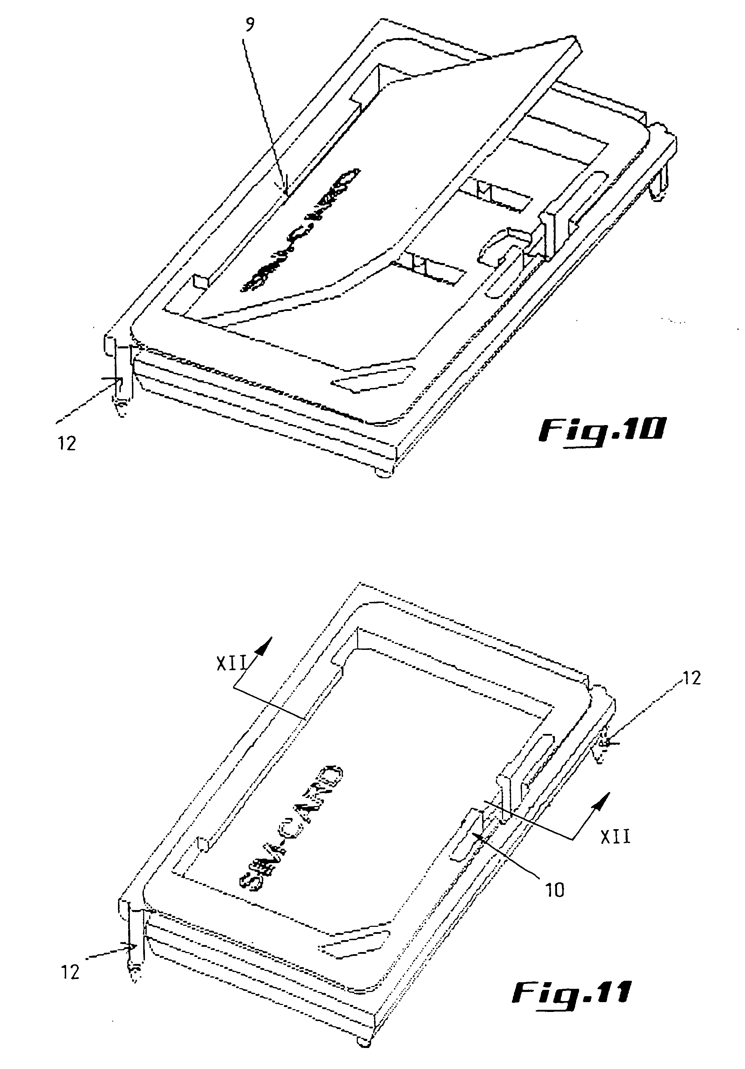

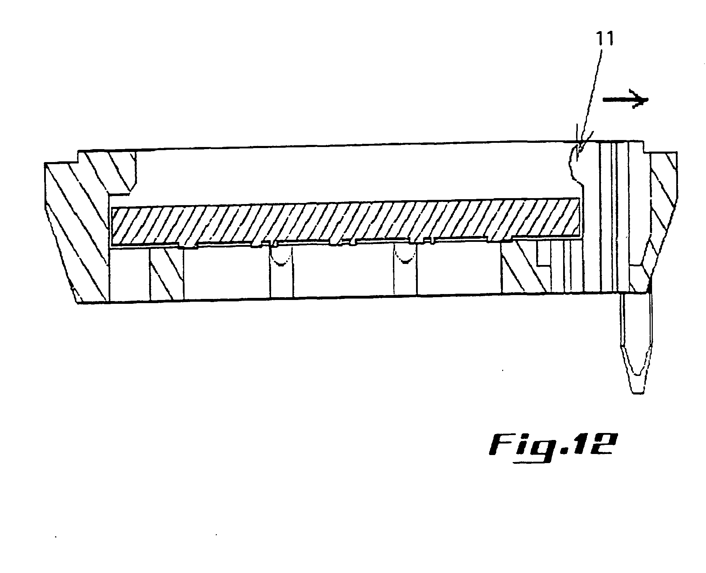

Figures 10 and 11 illustrate how to insert a SIM card on the connector 6 according to the invention. In a first step, a first border of the SIM card is fitted in a first border 9 of the connector. Then the second border of the card is pushed into the connector. On the second border 10 of the connector, there is provided a latching member 11, which is illustrated in Figure 12. When pushing the opposite border of the card, the latching member is displaced away according to the arrow (Figure 12). For removing the card, the user has to push the latching member back according to the arrow and retrieves the card by means of the opening 12. The resilient force exerted by the contact members also helps to push the SIM card out of the connector. The latching member is made of a resilient material, e.g. ABS, so that it automatically returns to a locking position for locking the SIM card. The correct dimensioning of the latching member and the use of resilient material provides a membrane character to the latching member enabling to adequately enclosing the SIM card. The SIM card is kept locked in the correct position due to the pressure applied by the resilient material on the card.

While the preferred embodiment is described with reference to a data processing device for the transmission of data, other kinds of transmission devices can equally well be equipped with the invention (e.g. a fax transmission/reception device, point of sales terminals).

## Claims

1. A telecommunications card provided for being connected to a host device, in particular a PC notebook, said host device comprising processing means and a power source (VCC), said card comprising a bus to which a host interface (4) for communicating with said processing means, control means (3) and an RF section (1) for transmitting and receiving signals are connected, said card being provided for receiving operational power from said power source, **characterised in that** said card comprises a current limiting device (U1) comprising a first input (IN1) for receiving power from said power source (VCC) and a first output (OUT1) for transmitting said power to the RF section (1), which is connected to said first output (OUT1), said current limiting device (U1) further comprising a second input (IN1) for receiving power from said power source (VCC) and a second output (OUT1) for supplying said power for charging purposes to a rechargeable power source (C3) connected to said second output (OUT1) and to the RF section (1), said current limiting device (U1) comprising current limiting means for limiting the current retrieved from said power source (VCC), said rechargeable power source (C3) being provided for discharging its previously charged power towards the RF section (1) as auxiliary power in addition to the power supplied from the first output (OUT1) in such a manner to deliver a peak power to the RF section.

2. A telecommunications card according to claim 1, wherein said rechargeable source (C3) comprises a number of capacitors in parallel.

3. A telecommunications card according to claim 1 or 2, further comprising switching means (ON/OFF) connected to said current limiting device (U1) and provided for switching on and off said current limiting device (U1).

4. A telecommunications card according to claim 3, wherein said control means (3) are provided for controlling said switching means (ON/OFF).

5. A telecommunications card according to any one of the preceding claims, further comprising power level setting means (MODE, Q1, R1-R4), connected to said current limiting device (U1) and provided for setting a maximum allowed transmitter power level.

6. A telecommunications card according to any one of the preceding claims, comprising a cover provided for enclosing a printed circuit board onto which said bus is provided, **characterised in that** said card further comprises SIM card (21) holding means (6) applied on said printed circuit board and said cover and that an opening corresponding to the dimensions of the said SIM card holding means is provided in the cover.

7. A telecommunications card according to claim 6, wherein said SIM card holding means (6) comprises a latching member (11) provided for being displaced between an open position for inserting and retrieving a SIM card (21) and a closed position for holding said SIM card (21) in said holding means (6).

8. A telecommunications card as claimed in claim 6 or 7, **characterised in that** said latching member (11) is made of resilient material.

9. A telecommunications card as claimed in any one of the claims 6 to 8, **characterised in that** said SIM card holding means (6) are applied on the printed circuit board carrying a control module (3) of a PCMCIA card.

## Patentansprüche

1. Telekommunikationskarte, die zum Anschluss an ein ein Verarbeitungsmittel und eine Stromquelle (VCC) umfassendes Host-Gerät, insbesondere an ein PC-Notebook, dient, wobei die Karte einen Bus, an den eine Host-Schnittstelle (4) zum Kommunizieren mit dem Verarbeitungsmittel, ein Steuermittel (3) und ein HF-Abschnitt (1) zum Senden und Empfangen von Signalen angeschlossen sind, umfasst, wobei die Karte zum Empfang von Betriebsstrom von der Stromquelle dient, **dadurch gekennzeichnet, dass** die Karte ein Strombegrenzungsgerät (U1) mit einem ersten Eingang (IN1) zum Empfang von Strom von der Stromquelle (VCC) und einen ersten Ausgang (OUT1) zum Senden des Stroms an den an den ersten Ausgang (OUT1) angeschlossenen HF-Abschnitt (1) umfasst, wobei das Strombegrenzungsgerät (U1) weiterhin einen zweiten Eingang (IN1) zum Empfangen des Stroms von der Stromquelle (VCC) und einen zweiten Ausgang (OUT1) zum Liefern des Stroms zu Ladezwecken an eine an den zweiten Ausgang (OUT1) und den HF-Abschnitt (1) angeschlossene wiederaufladbare Stromquelle (C3) umfasst, wobei das Strombegrenzungsgerät (U1) Strombegrenzungsmittel zum Begrenzen des von der Stromquelle (VCC) abgerufenen Stroms umfasst, und die wiederaufladbare Stromquelle (C3) dazu dient, ihren zuvor geladenen Strom in Richtung des HF-Abschnitts (1) als Hilfsstrom zusätzlich zu dem vom ersten Ausgang (OUT1) gelieferten Strom auf eine solche Weise abzuladen, dass ein Spitzenstrom an den HF-Abschnitt geliefert wird.

2. Telekommunikationskarte nach Anspruch 1, wobei die wiederaufladbare Quelle (C3) eine Anzahl von parallel geschalteten Kondensatoren umfasst.

3. Telekommunikationskarte nach Anspruch 1 oder 2, weiterhin umfassend ein Schaltmittel (ON/OFF), welches an das Strombegrenzungsgerät (U1) angeschlossen ist und dazu dient, das Strombegrenzungsgerät (U1) ein- und auszuschalten.

4. Telekommunikationskarte nach Anspruch 3, wobei das Steuermittel (3) zum Steuern des Schaltmittels (ON/OFF) dient.

5. Telekommunikationskarte nach einem der vorhergehenden Ansprüche, weiterhin umfassend Strompegeleinstellmittel (MODE, Q1, R1-R4), die an das Strombegrenzungsgerät (U1) angeschlossen sind und zum Einstellen eines höchstzulässigen Sender-Strompegels dienen.

6. Telekommunikationskarte nach einem der vorhergehenden Ansprüche, umfassend eine Abdeckung zum Umschließen einer Leiterplatte, auf der der Bus bereitgestellt wird, **dadurch gekennzeichnet, dass** die Karte weiterhin ein SIM-Kartenhaltemittel (6), das auf der Leiterplatte befestigt wird, und die Abdeckung umfasst, und dass in der Abdeckung eine den Abmessungen des SIM-Kartenhaltemittels entsprechende Öffnung vorgesehen ist.

7. Telekommunikationskarte nach Anspruch 6, wobei das SIM-Kartenhaltemittel (6) ein Verriegelungsglied (11) umfasst, das dazu dient, zwischen einer offenen Position zum Einsetzen und Herausnehmen einer SIM-Karte (21) und einer geschlossenen Position zum Halten der SIM-Karte (21) im Haltemittel (6) verschoben zu werden.

8. Telekommunikationskarte nach Anspruch 6 oder 7, **dadurch gekennzeichnet, dass** das Verriegelungsglied (11) aus fedemdem Material besteht.

9. Telekommunikationskarte nach einem der Ansprüche 6 bis 8, **dadurch gekennzeichnet, dass** das SIM-Kartenhaltemittel (6) auf der ein Steuermodul (3) einer PCMCIA-Karte tragenden Leiterplatte befestigt wird.

## Revendications

1. Carte de télécommunication prévue pour être connectée à un dispositif hôte, en particulier un ordinateur bloc-notes, ledit dispositif hôte comprenant des moyens de traitement et une source de puissance (VCC), ladite carte comprenant un bus auquel sont connectés une interface hôte (4) pour communiquer avec lesdits moyens de traitement, des moyens de contrôle (3) et une section RF (1) pour transmettre et recevoir des signaux, ladite carte étant prévue pour recevoir de la puissance opérationnelle de ladite source de puissance, **caractérisée en ce que** ladite carte comprend un dispositif limiteur de courant (U1) comprenant une première entrée (IN1) pour recevoir de la puissance de ladite source de puissance (VCC) et une première sortie (OUT1) pour transmettre ladite puissance à la section RF (1) qui est connectée à ladite première sortie (OUT1), ledit dispositif limiteur de courant (U1) comprenant en outre une deuxième entrée (IN1) pour recevoir de la puissance de ladite source de puissance (VCC) et une deuxième sortie (OUT1) pour foumir ladite puissance à des fins de chargement d'une source de puissance rechargeable (C3) connectée à ladite deuxième sortie (OUT1) et à la section RF (1), ledit dispositif limiteur de courant (U1) comprenant des moyens limiteurs de courant pour limiter le courant récupéré de ladite source de puissance (VCC), ladite source de puissance rechargeable (C3) étant prévue pour décharger sa puissance précédemment chargée vers la section RF (1) en tant que puissance auxiliaire en plus de la puissance fournie par la première sortie (OUT1) de manière à délivrer une puissance de pointe à la section RF.

2. Carte de télécommunication selon la revendication 1, dans laquelle ladite source rechargeable (C3) comprend un certain nombre de condensateurs en parallèle.

3. Carte de télécommunication selon la revendication 1 ou 2 comprenant en outre des moyens de commutation (ON / OFF) connectés audit dispositif limiteur de courant (U1) et prévus pour mettre en circuit et hors circuit ledit dispositif limiteur de courant (U1).

4. Carte de télécommunication selon la revendication 3, dans laquelle lesdits moyens de contrôle (3) sont prévus pour contrôler lesdits moyens de commutation (ON / OFF).

5. Carte de télécommunication selon une quelconque des revendications précédentes comprenant en outre des moyens de réglage du niveau de puissance (MODE, Q1, R1 - R4) connectés audit dispositif limiteur de courant (U1) et prévus pour régler un niveau de puissance maximale admissible de transmission.

6. Carte de télécommunication selon une quelconque des revendications précédentes comprenant un couvercle prévu pour enfermer une carte de circuits imprimés sur laquelle ledit bus est prévu, **caractérisée en ce que** ladite carte comprend en outre des moyens de retenue (6) de carte SIM (21) appliqués sur ladite carte de circuits imprimés et ledit couvercle et **en ce qu'**une ouverture correspondant aux dimensions desdits moyens de retenue de carte SIM est prévue dans le couvercle.

7. Carte de télécommunication selon la revendication 6, dans laquelle ledit moyen de retenue (6) de carte SIM comprend un élément de verrouillage (11) prévu pour être déplacé entre une position ouverte pour insérer et récupérer une carte SIM (21) et une position fermée pour retenir ladite carte SIM (21) dans ledit moyen de retenue (6).

8. Carte de télécommunication selon la revendication 6 ou 7, **caractérisée en ce que** ledit élément de verrouillage (11) est fabriqué en matière élastique.

9. Carte de télécommunication selon une quelconque des revendications 6 à 8, **caractérisée en ce que** lesdits moyens de retenue (6) de carte SIM sont appliqués sur la carte de circuits imprimés portant un module de contrôle (3) d'une carte PCMCIA.
